# FASCICULE DE BREVET EUROPEEN

(11) **EP 0 603 073 B1**
(45) Date de publication et mention de la délivrance du brevet: **13.08.1997**
(21) Numéro de dépôt: 93403049.5
(22) Date de dépôt: 16.12.1993
(51) Int. Cl.: C03C 27/04, C08J 5/12, C08G 18/62

(54) **Composition de primage et procédé de traitement d'un vitrage**
Primerzusammensetzung und Verfahren zur Behandlung einer Glasscheibe
Primer composition and process to treat glass pane

(30) Priorité: 18.12.1992 FR 9215293
(43) Date de publication de la demande: 22.06.1994
(73) Titulaire: SAINT-GOBAIN VITRAGE, 92400 Courbevoie (FR)
(72) Inventeur: Drujon, Frédéric, F-60150 Machemont (FR); Daude, Gérard, F-33140 Villenave d'Ornon (FR)
(74) Mandataire: Breton, Jean-Claude

(56) Documents cités:
- EP-A- 0 431 534
- EP-A- 0 487 377
- FR-A- 2 160 658
- FR-A- 2 209 811
- US-A- 4 625 012

## Description

L'invention concerne une composition de primage pour l'adhésion d'une matière plastique sur un substrat, notamment dans l'industrie des vitrages pour véhicules automobiles.

Ce type de composition de primage peut être nécessaire pour différentes applications de collage concernant ces vitrages.

Tout d'abord, ces vitrages peuvent être pourvus d'un profil périphérique surmoulé ou joint d'encapsulation. Il est usuel de renforcer l'adhésion entre un tel profil et le verre par une composition de primage notamment pour assurer une étanchéité totale.

Le choix de la composition de primage est fonction de la nature du profil surmoulé. Il peut s'agir d'un profil en polyuréthane qui est obtenu par injection thermoplastique ou par injection réactive (RIM). Il peut s'agir d'un profil obtenu par injection thermoplastique d'autres matières thermoplastiques en particulier des élastomères oléfiniques ou styréniques.

Il peut également s'agir d'un profil en PVC obtenu par injection thermoplastique ou par injection sous pression réduite d'un mélange, ayant la viscosité adéquate, d'un PVC avec un catalyseur, par exemple des produits connus sous l'appellation "Plastisol", qui est ensuite activé par un rayonnement électromagnétique à hautes fréquences, très hautes fréquences ou ultra-hautes fréquences.

Des vitrages de ce type, pourvus d'un profil périphérique surmoulé, peuvent être montés par collage dans une baie de carrosserie de véhicule automobile. Pour réaliser ce collage, on utilise généralement un cordon adhésif à base d'un polyuréthane. Ce cordon peut être déposé en deux emplacements différents, soit sur le profil surmoulé, soit sur le verre, en bordure du profil. Dans les deux cas, il est préférable de renforcer l'adhésion du cordon adhésif sur le substrat sur lequel il est déposé, c'est-à-dire soit sur le profil surmoulé, soit sur le verre. Pour cela, on utilise une composition de primage adaptée au cas envisagé.

Une autre technique de préparation des vitrages pour leur montage dans des baies de carrosserie automobile consiste à déposer par extrusion, en périphérie du vitrage, un profil notamment de type polyuréthane. Il est également important d'obtenir une très forte adhésion de ce profil sur le verre, notamment par dépôt d'une composition de primage sur le verre.

Il apparaît qu'il est nécessaire pour le fabricant de vitrages de disposer de plusieurs compositions de primage en fonction de l'adhésion qu'il est amené à renforcer. En effet, le choix d'une composition de primage pourra être fonction de la nature du profil périphérique, de l'étape de réalisation : collage du profil ou du cordon adhésif, ou du choix de l'emplacement du collage du cordon adhésif : sur le verre ou sur le profil.

Par ailleurs, les compositions de primage généralement utilisées sont à base de plusieurs composants et ne garantissent pas une grande stabilité dans le temps.

L'invention a pour but une composition de primage comportant un minimum de composants et pouvant garantir une adhésion pour tous les types de collage énumérés précédemment.

Un autre but de l'invention est que les vitrages puissent être stockés pendant une longue durée après le dépôt de la composition de primage et que celle-ci soit toujours réactive lors d'un collage.

Ces buts sont atteints selon l'invention par une composition de primage comprenant essentiellement un copolymère de chlorure de polyvinyle à groupements hydroxyles libres. Par essentiellement on entend selon l'invention le composant actif principal. Est exclu de la composition tout composant isocyanate.

En tant que copolymère PVC à groupements hydroxyles, on peut utiliser des résines vinyliques présentant la structure générale suivante : 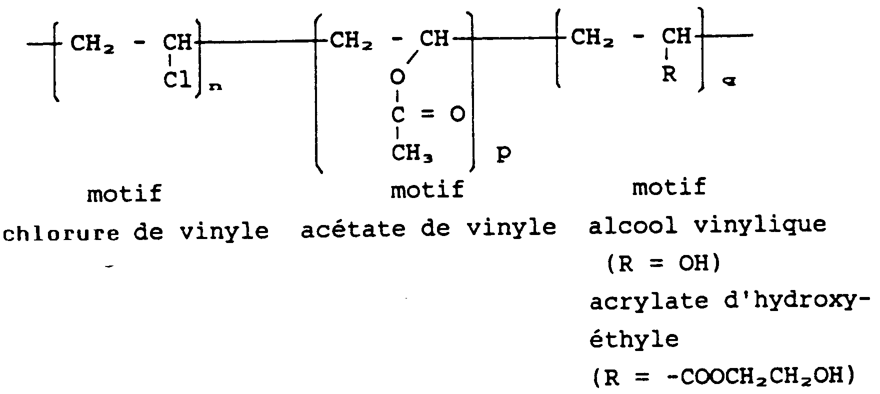 et des masses moléculaires comprises entre 2 000 et 100 000 environ et de préférence entre 5 000 et 50 000 environ, le motif chlorure de vinyle correspondant à environ 20 à 95 % en poids, le motif acétate de vinyle correspondant à environ 2 à 40 % en poids et le motif alcool vinylique ou acrylate d'hydroxyéthyle correspondant à environ 2 à 40 % en poids.

Dans une variante selon l'invention, la composition de primage est associée à au moins un silane, de préférence choisi dans la famille des isocyanatosilanes et/ou des vinylsilanes. Cette variante est notamment utilisée pour une adhésion verre-matière plastique.

L'invention propose également un procédé de traitement d'un vitrage pour améliorer l'adhésion d'un profil surmoulé consistant à traiter au moins une partie d'une face du vitrage par la composition décrite ci-dessus.

L'invention propose également un procédé de traitement d'un système vitrage-profil surmoulé consistant à traiter au moins une zone de ce système par la composition.

Selon l'un ou l'autre de ces procédés, on obtient un vitrage offrant une bonne adhésion avec une matière plastique. Cette adhésion peut se faire entre le vitrage et le profil surmoulé, entre le profil surmoulé et un cordon adhésif ou entre le vitrage et un cordon adhésif.

La composition de primage proposée donne entière satisfaction en particulier pour l'adhésion d'un cordon adhésif à base de polyuréthane sur un profil surmoulé en chlorure de polyvinyl (PVC).

Dans le cas d'un profil surmoulé à base de polyuréthane ou éventuellement à base de thermoplastique du type élastomères oléfiniques ou stynéniques, l'adhésion obtenue s'avère intéressante.

Ces résultats sont surprenants car généralement l'art antérieur préconise pour ce type de composition des solutions conduisant après polymérisation à des structures du type polyuréthane.

Une des caractéristiques essentielles de la composition de primage est la présence de groupes OH à la surface du profil surmoulé traité. Ces groupes OH ont l'avantage d'être stables et donc de demeurer réactifs pendant un stockage, même prolongé, pour réagir ultérieurement avec des groupes NCO libres du cordon adhésif, qui n'est pas entièrement polymérisé au moment de la pose.

Avant de revêtir de cette composition la face à traiter du profil surmoulé, il est préférable de procéder à un prétraitement de cette face. Ce prétraitement peut consister en un nettoyage à l'aide d'un solvant et il peut s'effectuer en une ou plusieurs fois. Il a pour but notamment d'éliminer, au moins partiellement de ladite face, le produit démoulant lorsqu'on utilise un tel produit au cours du procédé de moulage du joint et/ou le cas échéant le stabilisant ou les autres agents ayant une influence négative sur l'adhésion. Le solvant utilisé pour le prétraitement peut être choisi notamment parmi les solvants chlorés, l'essence de térébenthine, le white-spirit, le pentane, le tétrahydrofurane (THF), etc.., seul ou en mélange. On choisira de préférence de l'acétone, de l'heptane, de l'isododécane, ou de la Méthyl Ethylcétone.

Le dépôt de la composition de primage peut ensuite être effectué, par exemple à l'aide d'un feutre. Pour faciliter son application la composition peut être appliquée sous la forme d'une solution dans un solvant, tel que la Méthyl Ethylcétone.

Cette composition de primage présente également l'avantage de pouvoir être utilisée avantageusement pour d'autres applications, notamment pour l'adhésion de matières plastiques sur un vitrage.

Elle sera dans ce cas de préférence associée à des silanes choisis dans la famille des isocyanatosilanes ou des vinylsilanes. Le dépôt peut alors se faire en deux étapes : dans un premier temps, on dépose une solution à base de silanes puis dans un second temps, on la recouvre de la composition de primage. Le dépôt peut également être effectué en une seule étape lorsque les silanes sont associés à la composition de primage dans une même solution.

Dans le cas où l'on réalise un profil surmoulé en PVC, soit par injection thermoplastique, soit par injection sous pression réduite d'un mélange du type "Plastisol", la composition de primage est tout à fait satisfaisante.

Elle peut également être intéressante pour améliorer l'adhésion de profil surmoulé de type polyuréthane obtenu soit par injection thermoplastique soit par injection réactive (RIM) et éventuellement de profils surmoulés thermoplastiques de type élastomères oléfiniques ou styréniques obtenus par injection thermoplastique.

La composition de primage décrite selon l'invention peut encore être utilisée pour renforcer l'adhésion d'un profil déposé sur le vitrage par extrusion, par exemple un cordon adhésif qui peut servir au montage du vitrage dans une baie de carrosserie de véhicule automobile.

Il peut être intéressant lorsque l'on dépose la composition de primage, en combinaison ou non avec des silanes, sur le vitrage pour renforcer l'adhésion d'un profil surmoulé ou d'un profil déposé par extrusion de prévoir une zone d'enduction plus importante sur la face du vitrage sur laquelle viendra par la suite le cordon adhésif. En effet, la composition de primage selon l'invention reste réactive dans le temps, c'est-à-dire même après une longue période de stockage. Il est donc possible par exemple pour le fabricant de vitrages de déposer la composition de primage sur une surface plus importante que celle recouverte par le profil. Il reste donc une zone du vitrage comportant, en bordure du profil surmoulé, une couche de la composition de primage encore réactive lorsque le cordon adhésif est déposé, par exemple par le constructeur automobile.

Par ailleurs, pour renforcer l'adhésion d'un profil surmoulé qui recouvre partiellement les deux faces du vitrage, il est préférable de déposer la composition de primage sur les deux faces du vitrage.

D'autres caractéristiques et avantages de l'invention apparaîtront dans la description suivante d'exemples d'applications de la composition de primage selon l'invention.

Des essais ont été réalisés en application de la composition de primage selon l'invention pour améliorer l'adhésion d'un cordon adhésif sur le profil surmoulé d'un vitrage.

Le cordon adhésif utilisé est un joint commercialisé sous l'appellation BETASEAL HV3. L'adhésion est évaluée par des tests de cisaillement réalisés sur des éprouvettes. Une bonne adhésion correspond à une valeur Ho supérieure à 2 MPa.

### Essai n° 1

Le profil surmoulé est réalisé par le procédé de moulage par injection réactive (RIM). Le produit utilisé est par exemple un mélange de composants aptes à former un profil ou joint en polyuréthane.

La valeur obtenue est :
Ho>3MPa

### Essai n° 2

Le profil surmoulé est réalisé par le procédé de moulage par injection thermoplastique. Le produit injecté utilisé est un chlorure de polyvinyle sans groupements nitriles, choisis parmi ceux bien connus pour cette application.

La valeur obtenue est :
Ho>3MPa

### Essai n° 3

Le profil surmoulé est réalisé par le procédé d'injection sous pression réduite d'un mélange ayant la viscosité adéquate d'un PVC avec un catalyseur, par exemple des produits connus sous l'appellation plastisol.

La valeur obtenue est :
Ho>3MPa

Ces essais montrent que la composition de primage selon l'invention conduit à des résultats satisfaisants.

## Revendications

1. Composition de primage pour l'adhésion d'une matière plastique sur un substrat, notamment dans l'industrie des vitrages, caractérisée en ce qu'elle comprend essentiellement un copolymère de chlorure de polyvinyle à groupements hydroxyles libres.

2. Composition selon la revendication 1, caractérisée en ce que le copolymère PVC à groupements hydroxyles présente la formule suivante : 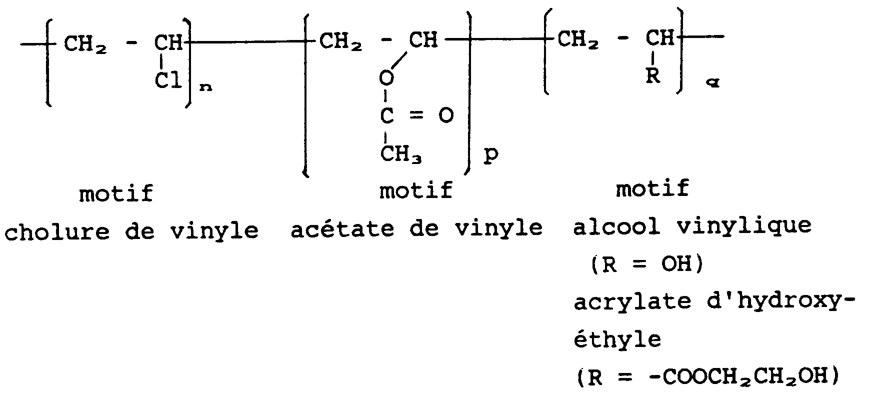 et une masse moléculaire comprise entre 1 000 et 100 000 environ, et de préférence de 2 000 à 50 000, le motif chlorure de vinyle correspondant à environ 20 à 95 % en poids, le motif acétate de vinyle correspondant à environ 2 à 40 % en poids et le motif alcool vinylique ou acrylate d'hydroxyéthyle correspondant à environ 2 à 40 % en poids.

3. Composition selon les revendications 1 ou 2, caractérisée en ce qu'elle est associée à au moins un silane.

4. Composition selon la revendication 3, caractérisée en ce qu'au moins un silane est un isocyanatosilane ou un vinylsilane.

5. Procédé de traitement d'un vitrage pour améliorer l'adhésion d'un profil surmoulé, caractérisé en ce qu'on traite au moins une partie de la zone destinée à être recouverte par le profil surmoulé par la composition décrite selon les revendications 1 à 4.

6. Procédé de traitement d'un vitrage muni d'un profil surmoulé, caractérisé en ce qu'on traite au moins une partie de la zone du vitrage surmoulé destinée à recevoir le cordon adhésif par la composition décrite selon les revendications 1 à 4.

7. Vitrage monolithique ou feuilleté, destiné notamment à être monté dans une baie de carrosserie, traité selon l'un des procédés décrit dans les revendications 5 ou 6.

8. Utilisation de la composition de primage décrite dans les revendications 1 à 4 pour l'adhésion d'une matière plastique sur le verre.

9. Utilisation de la composition selon la revendication 8, caractérisée en ce que la matière plastique, notamment un polyuréthane, est un profil surmoulé obtenu par injection réactive.

10. Utilisation de la composition selon la revendication 8, caractérisée en ce que la matière plastique est un profil surmoulé obtenu par injection thermoplastique.

11. Utilisation de la composition selon la revendication 8, caractérisée en ce que la matière plastique est un profil déposé par extrusion, notamment, un polyuréthane.

12. Utilisation de la composition selon la revendication 8, caractérisée en ce que la matière plastique est un profil surmoulé en PVC obtenu par injection sous pression réduite d'un mélange, ayant la viscosité adéquate, d'un PVC avec un catalyseur, qui est ensuite activé par un rayonnement électromagnétique.

13. Utilisation de la composition de primage décrite dans les revendications 1 à 4 pour l'adhésion d'un cordon adhésif sur une matière plastique, notamment un profil surmoulé.

## Claims

1. Priming composition for the bonding of a plastics material to a substrate, notably in the glazing industry, characterized in that it comprises essentially a copolymer of polyvinyl chloride having free hydroxyl groups.

2. Composition according to claim 1, characterized in that the PVC copolymer having hydroxyl groups has the following formula: 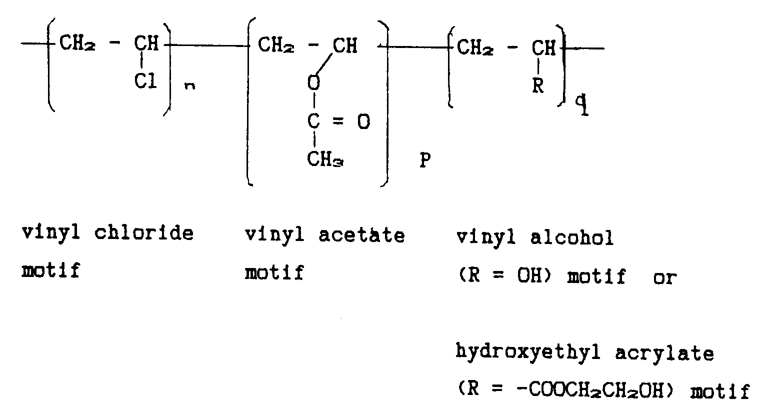 and a molecular mass lying between 1000 and 100,000 approximately, and preferably from 2000 to 50,000, the vinyl chloride motif corresponding to approximately 20 to 95% by weight, the vinyl acetate motif corresponding to approximately 2 to 40% by weight and the vinyl alcohol or hydroxyethyl acrylate motif corresponding to approximately 2 to 40% by weight.

3. Composition according to claims 1 or 2, characterized in that it is associated with at least one silane.

4. Composition according to claim 3, characterized in that at least one silane is an isocyanatosilane or a vinyl silane.

5. Method of treating a pane for improving the bond of a moulded-on profile, characterized in that at least a portion of the zone intended to be covered by the moulded-on profile is treated with the composition described according to claims 1 to 4.

6. Method of treating a pane provided with a moulded-on profile, characterized in that at least a portion of the zone of the moulded-on pane intended for receiving the adhesive cord is treated with the composition described according to claims 1 to 4.

7. Monolithic or laminated pane, intended notably to be mounted in a bodywork opening, treated according to one of the methods described in claims 5 or 6.

8. Use of the priming composition described in claims 1 to 4 for the bonding of a plastics material onto the glass.

9. Use of the composition according to claim 8, characterized in that the plastics material, notably a polyurethane, is a moulded-on profile produced by reactive injection moulding.

10. Use of the composition according to claim 8, characterized in that the plastics material is a moulded-on profile produced by thermoplastic injection moulding.

11. Use of the composition according to claim 8, characterized in that the plastics material is a profile deposited by extrusion, notably a polyurethane.

12. Use of the composition according to claim 8, characterized in that the plastics material is a moulded-on profile of PVC produced by injection under reduced pressure of a mixture, having the suitable viscosity, of a PVC and a catalyst, which is then activated by electromagnetic radiation.

13. Use of the priming composition described in claims 1 to 4 for the bonding of an adhesive cord onto a plastics material, notably a moulded-on profile.

## Patentansprüche

1. Haftvermittlungszusammensetzung für das Anhaften eines Kunststoffs auf einem Substrat, insbesondere in der Verglasungstechnik, **dadurch gekennzeichnet, daß** sie im wesentlichen ein Polyvinylchlorid-Copolymer mit freien Hydroxylgruppen umfaßt.

2. Zusammensetzung nach Anspruch 1, **dadurch gekennzeichnet, daß** das PVC-Copolymer mit Hydroxylgruppen folgende Formel 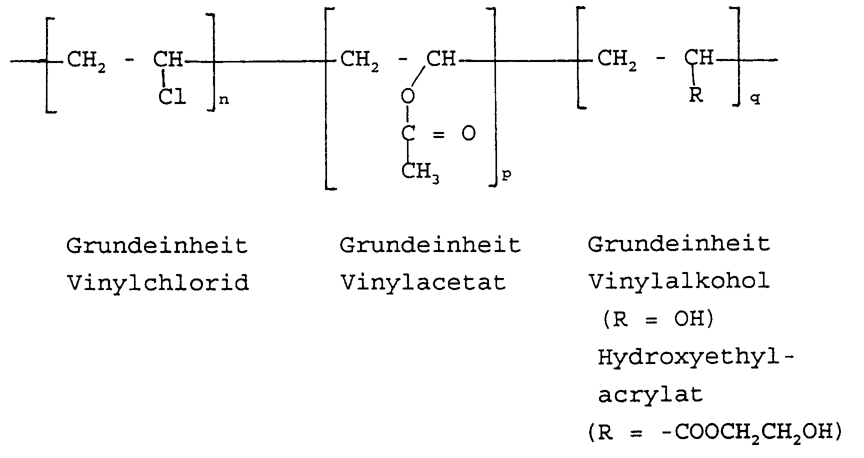 und eine Molmasse von etwa 1 000 bis 100 000 und vorzugsweise von 2 000 bis 50 000 besitzt, wobei die Vinylchlorid-Grundeinheiten etwa 20 bis 95 Gew.-%, die Vinylacetat-Grundeinheiten etwa 2 bis 40 Gew.% und die Vinylalkohol- oder Hydroxyethylacrylat-Grundeinheiten etwa 2 bis 40 Gew.-% ausmachen.

3. Zusammensetzung nach Anspruch 1 oder 2, **dadurch gekennzeichnet, daß** sie mit mindestens einem Silan verbunden ist.

4. Zusammensetzung nach Anspruch 3, **dadurch gekennzeichnet, daß** mindestens ein Silan ein Isocyanatosilan oder ein Vinylsilan ist.

5. Verfahren zur Behandlung einer Verglasung, um die Haftung eines aufgeformten Profils zu verbessern, **dadurch gekennzeichnet, daß** wenigstens ein Teil des Bereichs, der durch das aufgeformte Profil beschichtet werden soll, mit der Zusammensetzung nach den Ansprüchen 1 bis 4 behandelt wird.

6. Verfahren zur Behandlung einer Verglasung, die mit einem aufgeformten Profil versehen ist, **dadurch gekennzeichnet, daß** wenigstens ein Teil des Bereichs der aufgeformten Verglasung, der den Klebestreifen aufnehmen soll, mit der Zusammensetzung nach den Ansprüchen 1 bis 4 behandelt wird.

7. Einscheiben- oder Verbundverglasung, die insbesondere in eine Karosserieöffnung eingebaut wird und gemäß einem Verfahren des Anspruchs 5 oder 6 behandelt ist.

8. Verwendung der Haftvermittlungszusammensetzung nach den Ansprüchen 1 bis 4, um einen Kunststoff auf Glas anhaften zu lassen.

9. Verwendung der Zusammensetzung nach Anspruch 8, **dadurch gekennzeichnet, daß** der Kunststoff, insbesondere ein Polyurethan, ein durch Reaktionsspritzgießen hergestelltes aufgeformtes Profil ist.

10. Verwendung der Zusammensetzung nach Anspruch 8, **dadurch gekennzeichnet, daß** der Kunststoff ein durch thermoplastisches Spritzgießen hergestelltes aufgeformtes Profil ist.

11. Verwendung der Zusammensetzung nach Anspruch 8, **dadurch gekennzeichnet, daß** der Kunststoff, insbesondere ein Polyurethan, ein durch Extrudieren aufgebrachtes Profil ist.

12. Verwendung der Zusammensetzung nach Anspruch 8, **dadurch gekennzeichnet, daß** der Kunststoff ein aus PVC bestehendes aufgeformtes Profil ist, das durch Spritzgießen unter Unterdruck eines Gemischs erhalten wird, das die entsprechende Viskosität besitzt und aus einem PVC mit einem Initiator besteht, der anschließend durch elektromagnetische Strahlung aktiviert wird.

13. Verwendung der Haftvermittlungszusammensetzung nach den Ansprüchen 1 bis 4 zum Aufkleben eines Klebestreifens auf einem Kunststoff, insbesondere einem aufgeformten Profil.
